(19) Europäisches Patentamt
European Patent Office
Office européen des brevets

(11) **EP 3 074 834 B1**

(12) **EUROPÄISCHE PATENTSCHRIFT**

(45) Veröffentlichungstag und Bekanntmachung des Hinweises auf die Patenterteilung:
**12.06.2019 Patentblatt 2019/24**

(51) Int Cl.:
***G05D 7/06*** (2006.01)     ***C21C 5/38*** (2006.01)

(21) Anmeldenummer: **14776632.3**

(22) Anmeldetag: **25.09.2014**

(86) Internationale Anmeldenummer:
**PCT/EP2014/070434**

(87) Internationale Veröffentlichungsnummer:
**WO 2015/078608 (04.06.2015 Gazette 2015/22)**

(54) **VERFAHREN UND VORRICHTUNG ZUM ENERGIEEFFIZIENTEN BETRIEB VON SEKUNDÄREN ENTSTAUBUNGSANLAGEN**

METHOD AND APPARATUS FOR THE ENERGY-EFFICIENT OPERATION OF SECONDARY DUST REMOVAL SYSTEMS

PROCÉDÉ ET DISPOSITIF PERMETTANT UN FONCTIONNEMENT ÉCONOME EN ÉNERGIE D'INSTALLATIONS SECONDAIRES DE DÉPOUSSIÉRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2013 DE 102013224615**

(43) Veröffentlichungstag der Anmeldung:
**05.10.2016 Patentblatt 2016/40**

(73) Patentinhaber: **SMS group GmbH**
**40237 Düsseldorf (DE)**

(72) Erfinder:
• **THOMASBERGER, Jörg**
**40470 Düsseldorf (DE)**
• **TRAPPMANN, Volker**
**47800 Krefeld (DE)**
• **BRAAM, Malte**
**47798 Krefeld (DE)**
• **SCHUPPERT, Felix**
**45549 Sprockhövel (DE)**

(74) Vertreter: **Kross, Ulrich**
**Hemmerich & Kollegen**
**Patentanwälte**
**Hammerstraße 2**
**57072 Siegen (DE)**

(56) Entgegenhaltungen:
**EP-A2- 0 212 978**     **DE-A1- 3 301 668**
**US-A1- 2004 093 682**     **US-A1- 2004 186 599**
**US-A1- 2007 209 653**

**Beschreibung**

Gebiet der Erfindung

Die vorliegende Erfindung ist auf ein Verfahren sowie eine Vorrichtung zum Steuern von sekundären Entstaubungsanlagen gerichtet.

Der Stand der Technik

In einem Stahlwerk fallen bei unterschiedlichen Herstellungsprozessen staubhaltige und teils giftige Abgase an. Schätzungen gehen davon aus, dass alleine 15 Kilogramm Staub pro produzierter Tonne Stahl bei der Herstellung in einem Elektrolichtbogenofen entstehen. Geht man davon aus, dass ein mittelgroßes Stahlwerk im Jahr 400.000 Tonnen Stahl produziert, würden somit jährlich 6000 Tonnen Staubemissionen anfallen.

Zum Schutz der Mitarbeiter und der Umwelt, ist es wichtig dass die anfallenden Staubemissionen an der Entstehungsstelle abgesaugt werden. Bei dieser Absaugung muss die Einhaltung der Arbeitsplatzgrenzwerte (AGW) an staubhaltigen Emissionen gewährleistet werden. Die Einhaltung dieser Werte wird durch sogenannte Entstaubungsanlagen realisiert. Entstaubungsanlagen sind in primäre und sekundäre Anlagen gegliedert. Die primäre Entstaubung ist dafür zuständig die Staubemissionen, die direkt an den Maschinen bei dem Erschmelzen von Stahlschrott (z.B. am Elektrolichtbogenofen) abfallen, abzuführen. Die sekundäre Entstaubung ist dafür zuständig die Staubemissionen, die sich in der Produktionshalle befinden, abzuführen. Dies wird durch Haubenkonstruktionen, welche sich im Nahbereich der jeweiligen Staubquelle befinden (z.B. am Konverter), realisiert. Ein solches Entstaubungssystem aus drei Hauptkomponenten, nämlich einem Rohrleitungsnetzwerk, einem Saugzuggebläse und einer Filterkammer.

Um die Staubemissionen an den jeweiligen Entstehungsorten abzusaugen, werden an den Absaugstellen definierte Volumenströme benötigt. Die Größe dieser abzusaugenden Volumenströme richtet sich danach, wie stark die Konzentrationen der Staubemissionen in der Umgebungsluft sind und wird durch eine visuelle Einschätzung bei der Inbetriebnahme der Anlage festgelegt. Unter einer visuellen Einschätzung versteht sich die manuelle Einstellung der Volumenströme an den entsprechenden Absaugstellen. Dazu wird während eines realen Produktionsprozesses der Volumenstrom an den entsprechenden Absaugstellen solange erhöht, bis die Einschätzung mit dem Auge zeigt, dass alle Abgase durch den Volumenstrom abtransportiert werden. Durch eine Messung des AGW-Werts in der Umgebung des Produktionsprozesses wird überprüft, ob der eingestellte Volumenstrom ausreichend ist. Ist dies der Fall, werden die hierfür relevanten Betriebsparameter aufgenommen (z.B. Unterdruck im Hauptkanal) und in der Steuerung des Entstaubungssystems hinterlegt.

Um die benötigten Volumenströme an den verschiedenen Absaugstellen einzustellen, sind in den Rohrleitungen, die zu einer Absaugstelle führen, einflügelige oder bei größeren Rohrdurchmessern mehrflügelige Abluftklappen verbaut, welche zwischen 0-100 % in ihrer Schließposition verfahren werden können. Den erforderlichen Unterdruck einer Entstaubungsanlage produziert das Saugzuggebläse. Dies besteht im Wesentlichen aus zwei bis drei Kernkomponenten, nämlich einem Gebläserad, einem elektrischen Motor und ggf. einer hydraulischen Kupplung oder einem Frequenzumrichter. Der elektrische Motor versetzt das Gebläserad in eine rotatorische Bewegung. Das Gebläserad sorgt dann, aufgrund der geometrischen Anordnung der Flügelräder, für einen Unterdruck im Rohrleitungsnetzwerk. Diese Druckdifferenz zwischen dem Umgebungsdruck und dem entstandenen Unterdruck im Rohrleitungsnetzwerk sorgt dafür, dass ein Volumenstrom in Richtung des Saugzuggebläses entsteht.

Die benötigte Förderleistung eines solchen Systems wird durch nachfolgende Gleichung definiert.

$$P_{zu} = \dot{V}_{zu}\ \Delta p_{ges}$$

Aus dieser Gleichung wird ersichtlich, dass sowohl der abzusaugende Volumenstrom $\dot{V}_{zu}$, sowie der gesamte Druckverlust $\Delta p_{ges}$, wesentliche Auswirkungen auf die benötigte Förderleistung $P_{zu}$ einer sekundären Entstaubungsanlage haben. Nimmt man beispielsweise die in der Praxis gängigen Werte für den abzusaugenden Volumenstrom 2.000.000 m³/h verstaubte Luft an, und geht man davon aus, dass dieser Volumenstrom mit einer Druckdifferenz von 50 *mbar* aufgebracht wird, würde sich eine benötigte Förderleistung von circa 2,78 *MW* für eine solche Entstaubungsanlage ergeben. Dieses Beispiel soll zum einen verdeutlichen, wie energieintensiv sekundäre Entstaubungssysteme sind, und zum anderen soll hervorgehoben werden, dass es wichtig ist, Systemdruckverluste auf ein Minimum zu reduzieren.

Das Patentdokument EP 0 116 727 A2 beschreibt ein Regelverfahren für eine Entstaubungsanlage, wobei jeder Absaugstelle ein Regelkreis mit individuellem einstellbarem Sollwert zugeordnet ist. Außerdem ist ein übergeordneter Regelkreis für das Saugzuggebläse vorgesehen. Die Regelung benötigt eine besondere Sensorik, die aufwendig und kostspielig ist.

Aus dem Patentdokument CN 102635920 A ist ein Steuerungsverfahren für eine sekundäre Entstaubungsanlage bekannt, bei der ein Rohrleitungsnetzwerk ein Saugzuggebläse mit wenigstens zwei Absaugstellen verbindet, wobei das Rohrleitungsnetzwerk für jede Absaugstelle eine steuerbare Abluftklappe umfasst, deren Klappenstellung den Volumenstrom an der Absaugstelle beeinflusst, und wobei das Steuerungsverfahren folgende Schritte umfasst:

- Bereitstellen eines mathematischen Systemmodells welches das Rohrleitungsnetzwerk beschreibt, wobei jedes Rohrelement durch seine physikalischen und geometrischen Eigenschaften gekennzeichnet ist;
- Berechnen der Druckverluste im Rohrleitungsnetzwerk auf Grundlage des voll bestimmten mathematischen Systemmodells und der an den Absaugstellen geforderten Volumenströme;
- Steuerung der Abluftklappen so, dass die berechneten Klappenstellungen gewährleistet werden;
- Steuerung des Saugzuggebläses so, dass dessen Drehzahl solange erhöht wird, bis der berechnete Druckverlust des Gesamtsystems erreicht wird und somit die Volumenströme an den Absaugstellen gewährleistet werden.

Ferner ist aus dem Patentdokument CN 102635920 A eine Steuerungsvorrichtung für eine sekundäre Entstaubungsanlage bekannt, bei der ein Rohrleitungsnetzwerk ein Saugzuggebläse mit wenigstens zwei Absaugstellen verbindet, wobei das Rohrleitungsnetzwerk für jede Absaugstelle eine steuerbare Abluftklappe umfasst, deren Klappenstellung den Volumenstrom der an der Absaugstelle beeinflusst, und wobei die Steuerungsvorrichtung folgende Elemente umfasst:

- ein Speicherelement zum Bereitstellen einer mathematischen Systembeschreibung, welche das Rohrleitungsnetzwerk beschreibt, wobei jedes Rohrelement des Rohrleitungsnetzwerks durch seine physikalischen und geometrischen Eigenschaften gekennzeichnet ist;
- eine Steuereinheit, welche die Klappenstellung der Abluftklappen und die Drehzahl des Saugzuggebläses auf Grundlage des ermittelten Druckverlusts des gesamten Systems steuert.

Aufgabe der vorliegenden Erfindung ist es, ein Verfahren in Form eines neuen Steuerungskonzepts zu offenbaren, das einen energieeffizienten Betrieb sekundärer Entstaubungssysteme ermöglicht und wenigstens einige der o.g. Nachteile zu überwinden. Des Weiteren soll eine Vorrichtung sowie ein Computerprogramm offenbart werden, welche das erfindungsgemäße Verfahren umsetzen. Da ein unwirtschaftlicher Betrieb sekundärer Entstaubungsanlagen in Zeiten weltweit steigender Energiepreise für die Betreiber dieser Anlagen nicht weiter tragbar ist, steigt die Nachfrage, Entstaubungsanlagen aus Sicht des Energieeinsatzes zu optimieren.

Offenbarung der Erfindung

Die genannte technische Aufgabe wird durch die Merkmale des Anspruchs 1 gelöst. Dieser richtet sich auf ein Steuerverfahren für eine sekundäre Entstaubungsanlage, bei der ein Rohrleitungsnetzwerk ein Saugzuggebläse mit wenigstens zwei Absaugstellen verbindet. Das Rohrleitungsnetzwerk umfasst für jede Absaugstelle eine steuerbare Abluftklappe, deren Klappenstellung den Volumenstrom an der Absaugstelle beeinflusst. Darüber hinaus ergeben sich, je nach Schließposition der Klappe, unterschiedliche Druckverluste. Das Verfahren umfasst folgende Schritte:

- Bereitstellen eines mathematischen Systemmodells, welches das Rohrleitungsnetzwerk beschreibt, wobei jedes Rohrelement durch seine physikalischen und geometrischen Eigenschaften gekennzeichnet ist. Vorzugsweise kann das mathematische Modell auf Grundlage eines graphentheoretischen Ansatzes abgebildet werden; hierbei werden die diversen Rohrleitungselemente in Widerstandswerte überführt. Das resultierende mathematische Systemmodell ist in dem Fall ein Widerstandsnetzwerk;
- Berechnen der Druckverluste im Rohrleitungsnetzwerk auf Grundlage des voll bestimmten mathematischen Systemmodells und der an den Absaugstellen geforderten Volumenströme;
- Berechnen der, aus Sicht der Energieeffizienz, optimale Klappenstellung für jede Abluftklappe und Berechnung des Druckverlusts für das gesamte System, welche es erlauben mit möglichst geringer Förderleistung die geforderten Betriebsvolumenströme zu erreichen;
- Steuerung der Abluftklappen, so dass die berechnete Klappenstellung gewährleistet werden;
- Steuerung des Saugzuggebläses, so dass die vorgegebenen Volumenströme an den verschiedenen Absaugstellen gewährleistet werden. Hierzu wird vorzugsweise so die Drehzahl des Saugzuggebläses ab einer Ruhestellung, solange erhöht, bis der berechnete Druckverlust des Gesamtsystems erreicht wird und somit die Volumenströme an den Absaugstellen gewährleistet werden;

Die für das mathematische Modell benötigten Daten, Parameter und Funktionen werden anhand von folgenden Größen berechnet bzw. bestimmt:

- Widerstandsbeiwerte, welche die durchströmten Rohrelemente kennzeichnen;
- geometrische Eigenschaften der durchströmten Rohrelemente;
- physikalische Eigenschaften der durchströmten Rohrelemente (z.B. Temperaturleitfähigkeit welche durch den Wärmeübertragungskoeffizienten angegeben sein kann);
- Volumenströme welche die Rohrelemente durchströmen;

Vorzugsweise kann das Verfahren das Berechnen jeder Schließposition einer Abluftklappe des Rohrleitungsnetzwerks umfassen, wobei wenigstens ein Rohrstrang das Saugzuggebläse mit jeweils einer Abluftklappe verbindet. Des Weiteren kann der Rohrstrang des höchsten Druckverlusts bei voll geöffneter Klappe ermittelt werden. Die entsprechende Abluftklappe wird vom Verfahren vorzugsweise als 100 % geöffnet festgelegt.

Die restlichen Klappenstellungen können von dem Verfahren durch eine Berechnung auf Grundlage des mathematischen Modells ermittelt werden. Dabei werden einerseits die Informationen des graphentheoretischen Ansatzes genutzt, andererseits werden benötigte Informationen aus physikalischen Gesetzen (z.B. Maschen- und Knotenregel) gewonnen. Als Ergebnis ergibt sich die Öffnungsposition aller Abluftklappen im Rohrleitungsnetzwerk. Diese entsprechen dem einstellbaren Widerstandswert der Abluftklappe.

Das Rohrleitungsnetzwerk umfasst vorzugsweise einen Hauptstrang, welcher in Verbindung mit dem Saugzuggebläse steht und welcher sich wenigstens in zwei Nebenstränge verzweigt, welche jeweils mit wenigstens einer Absaugstelle verbunden sind. Die Nebenstränge können sich weiter verzweigen und so zu einer Vergrößerung des mathematischen Abbilds führen.

Vorzugsweise kann das Verfahren die folgenden weiteren Schritte umfassen:

- Berechnen der Druckverluste in dem Hauptstrang aufgrund der geometrischen und physikalischen Eigenschaften, sowie der entsprechenden Betriebsvolumenströme, der verschiedenen Rohrleitungselemente;
- Berechnen der Druckverluste in den Nebensträngen aufgrund der geometrischen und physikalischen Eigenschaften, sowie der entsprechenden Betriebsvolumenströme, der verschiedenen Rohrleitungselemente;
- Berechnen des gesamten Druckverlusts des gesamten Systems (von der Absaugstelle bis zum Saugzuggebläse);

Das Rohrleitungsnetzwerk kann aus Bauteilen unterschiedlichster Geometrie und Abmaßen bestehen. Vorteilhafterweise setzt sich das Rohrleitungsnetzwerk aus Rohrelementen zusammen, welche gerade Rohrelemente, Krümmungen, Erweiterungen, Reduzierungen und Zusammenführungen (z. B. T-Stücke) umfassen. Der Widerstandswert eines Rohrstrangs ergibt sich durch addieren der Widerstandswerte der Rohrelemente, aus welchen sich der Rohrstrang zusammensetzt.

Die Erfindung richtet sich ebenfalls auf eine Steuerungsvorrichtung für eine sekundäre Entstaubungsanlage, bei der ein Rohrleitungsnetzwerk ein Saugzuggebläse mit wenigstens zwei Absaugstellen verbindet, wobei das Rohrleitungsnetzwerk für jede Absaugstelle steuerbare Abluftklappen umfasst, deren Klappenstellung den Volumenstrom an der Absaugstelle beeinflusst. Die Steuerungsvorrichtung ist dadurch gekennzeichnet, dass sie folgende Elemente umfasst:

- ein Speicherelement zum Bereitstellen eines Widerstandsnetzwerkes, welches eine mathematische Systembeschreibung darstellt. Dabei sind die benötigten Daten durch physikalische Funktionen und Werte, sowie durch geometrische Abmaße gekennzeichnet. Jedes Rohrelement des Rohrleitungsnetzwerks ist durch seine physikalischen und geometrischen Eigenschaften gekennzeichnet;
- eine Rechnereinheit, welche das Speicherelement auslesen kann, und dazu konfiguriert ist, Druckverluste im Rohrleitungsnetzwerk aufgrund der geometrischen Anordnung des Widerstandsnetzwerkes und der an den verschiedenen Absaugstellen geforderten Volumenströme zu berechnen, wobei die Rechnereinheit des Weiteren dazu konfiguriert ist, die Klappenstellung für jede Abluftklappe und den gesamten Druckverlusts des Systems zu berechnen, welche es erlauben bei möglichst geringem Druckverlust des gesamten Systems die geforderten Volumenströme an den Absaugstellen zu gewährleisten.
- eine Steuerungseinheit, welche als Eingangsschnittstelle den Unterdruck durch geeignete Sensorik im Hauptkanal erfasst und die Drehzahl des Saugzuggebläses solange erhöht, bis der erfasste Druck mit dem berechneten Druck übereinstimmt. Die Drehzahl des Saugzuggebläses wird auf Grundlage des berechneten Druckverlustes des Gesamtsystems solange erhöht, bis dieser im System vorherrscht. Des Weiteren werden die berechneten Klappenstellungen der Abluftklappen auf Grundlage der ermittelten Klappenstellungen durch die Steuerungseinheit gesteuert.

Die Vorrichtung kann des Weiteren Einlesemittel umfassen, welche es ermöglichen die physikalischen Größen, die das Rohrleitungsnetzwerk beschreiben, in das Speicherelement einzulesen. Die Rechnereinheit kann weiter dazu konfiguriert sein, ein Widerstandsnetzwerk anhand dieser Größen zu erstellen, welches das Rohrleitungsnetzwerk beschreibt, und dieses im Speicherelement abzulegen.

Die Rechnereinheit kann vorzugsweise weiter dazu konfiguriert sein, die erfindungsgemäßen Verfahrensschritte umzusetzen.

Des Weiteren richtet sich die Erfindung auf einen Computer, der dazu geeignet ist das erfindungsgemäße Verfahren umzusetzen.

Die Erfindung richtet sich ebenfalls auf ein Computerprogramm und ein Programm für eine speicherprogrammierbare Steuerung, welche computerlesbare und logische Befehle umfasst, welche, wenn sie von einem Computer oder einer speicherprogrammierbaren Steuerung ausgeführt werden, den Computer oder die speicherprogrammierbare Steuerung dazu bringen, das erfindungsgemäße Verfahren auszuführen.

Des Weiteren richtet sich die Erfindung auf ein Computerprogrammprodukt, welches ein computerlesbares Medium umfasst, auf welchem dieses Computerprogramm gespeichert ist. Ebenfalls richtet sich diese Erfindung auf Produkte für speicherprogrammierbare Steuerungen, die es ermöglichen, Programme für speicherprogrammierbare Steuerungen abzuspeichern.

Das erfindungsgemäße Verfahren erlaubt es, eine sekundäre Entstaubungsanlage energieeffizient zu betreiben. Da das Verfahren auf einem mathematischen Modell des Rohrleitungssystems beruht, benötigt es keinen Regelkreis und ist daher einfach umzusetzen. Das Verfahren kann eine Entstaubungsanlage durch die Eingabe der gewünschten Volumenströme mittels einer, in einem mathematischen Modell implementierten graphentheoretischen Berechnung unter der Zuhilfenahme von physikalischen Regeln und Gesetzen, so berechnen, dass die Volumenströme an den verschiedenen Absaugstellen optimal eingestellt werden können. Gegenüber bekannten Steuerungsverfahren wurden durch Nutzung des erfindungsgemäßen Verfahrens Energieeinsparungen von über 25% ermittelt. Das Saugzuggebläse und die Abluftklappen werden nicht unnötig belastet, was den Verschleiß mindert. Es werden im System keine unnötig hohen Unterdrücke generiert und die erreichten Volumenströme entsprechen den geforderten Volumenströmen. Des Weiteren ist das Verfahren flexibel bezüglich Erweiterungen des Entstaubungssystems: Es genügt das mathematische Modell dem erweiterten System anzupassen, um mittels des Verfahrens die neuen optimalen Einstellungen zu berechnen. Erneute Inbetriebnahmen mit langen Stillstandszeiten werden so vermieden.

Kurze Beschreibung der Figuren

Im Folgenden werden kurz die Figuren der Ausführungsbeispiele beschrieben. Weitere Details sind der detaillierten Beschreibung der Ausführungsbeispiele zu entnehmen. Es zeigen:

| | |
|---|---|
| Figur 1 | ein Verfahrensablaufdiagramm für das erfindungsgemäße Verfahren; |
| Figur 2 | eine schematische Darstellung einer bevorzugten Ausführungsweise der erfindungsgemäßen Vorrichtung; |
| Figur 3 | eine schematische Darstellung eines Rohrelements; |
| Figur 4 | den ermittelten Widerstandsbeiwert des Rohrelements aus Figur 4, abhängig von dem das Element durchströmenden Volumenstrom; |
| Figur 5 | den ermittelten Widerstandsbeiwert einer steuerbaren Abluftklappe, abhängig von der Schließposition der Klappe; |
| Figur 6a und 6b | einen Knoten in einem Rohrleitungsnetzwerk und das äquivalente Widerstandsnetzwerk; |
| Figur 7a und 7b | eine Masche in einem Rohrleitungsnetzwerk und das äquivalente Widerstandsnetzwerk; |
| Figur 8a | ein Diagramm eines bespielhaften Rohrleitungsnetzwerkes einer sekundären Entstaubungsanlage; |
| Figur 8b | ein Diagramm eines Widerstandsnetzwerkes welches das Rohrleitungsnetzwerk einer sekundären Entstaubungsanlage kennzeichnet. |

Detaillierte Beschreibung der Ausführungsbeispiele

Das neue erfindungsgemäße Steuerungskonzept beruht auf der Idee, ein mathematisches Modell der sekundären Entstaubungsanlage zu bilden und mit Hilfe bereitgestellter Anlagendaten eine Berechnung durchzuführen, die als Ergebnis die Klappenstellungen und den gesamten Druckverlust des Systems hervorbringt. Auf Grundlage dieser Berechnungen werden die Abluftklappen des Systems in die entsprechende Position gefahren und die Drehzahl des Saugzuggebläses ab einer ursprünglichen Ruhestellung solange erhöht, bis der dadurch verursachte Druckverlust des Gesamtsystems (gemessen im Hauptkanal) das Niveau des berechneten gesamten Druckverlustes erreicht.

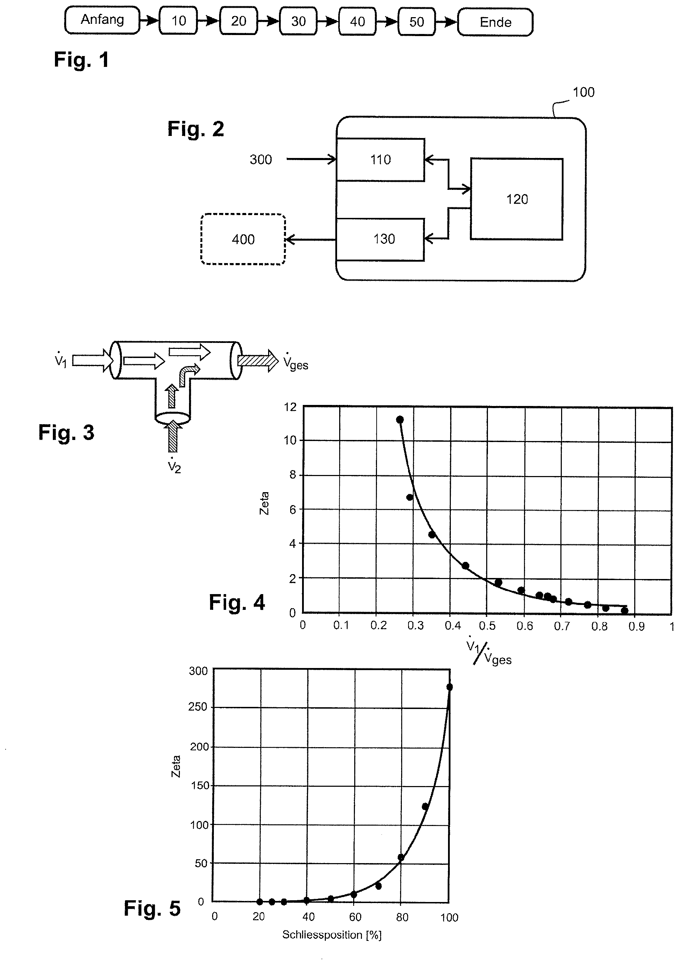

Dabei wird im ersten Schritt eine mathematische Systembeschreibung auf Basis eines graphentheoretischen Ansatzes und der Anlagendaten in einer Steuerungssoftware abgebildet. Dies entspricht Schritt 10 in Figur 1.

Im nächsten Schritt errechnet ein Algorithmus unter Berücksichtigung der Systemeigenschaften und Prozessanforderungen die Druckverluste im System (Schritt 20), und darauf basierend die optimale Stellung einer jeden Klappe und den gesamten Druckverlust des Systems (Schritt 30). Auf Grundlage dieser bereitgestellten Informationen werden die Klappen des Systems in die jeweilige Position gestellt (Schritt 40) und die Drehzahl des Saugzuggebläses solange erhöht, bis der vom Algorithmus errechnete Druckverlust im System erreicht wird (Schritt 50).

Es ergibt sich eine Steuerung, die es ermöglicht, an jeder Absaugstelle den vorher definierten Volumenstrom einzustellen und den gesamten Druckverlust im System auf ein Minimum zu reduzieren.

Dies beschreibt das grundlegende Prinzip der Erfindung. Die weiteren Erläuterungen beschreiben bevorzugte Ausführungsweisen der Erfindung und erlauben dem Fachmann das Umsetzen des Verfahrens.

Wie in Figur 2 gezeigt, umfasst die Erfindung ebenfalls eine Vorrichtung 100, welche zur Umsetzung des Verfahrens dient. Die Vorrichtung umfasst ein Speicherelement 110, eine Rechnervorrichtung 120 sowie ein Steuerungselement 130. Im Speicherelement wird ein mathematisches Modell 300 des Rohrleitungsnetzwerks einer sekundären Entstaubungsanlage abgelegt. Anhand dieser Daten errechnet eine Rechnervorrichtung 120 die Steuerungsgrößen im Einklang mit dem erfindungsgemäßen Verfahren. Die daraus resultierenden Klappenstellungen werden über das Steuerungselement 130 an die sekundäre Entstaubungsanlage 400 weitergegeben. Die Drehzahl des Saugzuggebläses der Entstaubungsanlage 400, wird solange erhöht bis der durch einen geeigneten Sensor erfasste Druckverlust des Gesamtsystems mit dem errechneten Druckverlust der Rechnervorrichtung 120 übereinstimmt. Das Steuerungselement 130 erhöht oder erniedrigt die Drehzahl für die jeweilige Prozessstufe.

In einer bevorzugten Ausführungsweise ist das mathematische Modell ein graphentheoretisches Abbild einer sekundären Entstaubungsanlage, welches durch die hinterlegten physikalischen Größen und Funktionen, sowie geometrischen Abmaße der verschiedenen Rohrleitungselemente beschrieben und berechnet werden kann. Das resultierende Modell kann als Widerstandsnetzwerk beschrieben werden.

Grundlagen des mathematischen Systementwurfs

Um Rohrleitungsnetzwerke in ein mathematisches Modell überführen zu können, ist es wichtig, bedeutsame physikalische Größen zu identifizieren und zu errechnen.

Es ist anzumerken, dass in dieser Beschreibung drei Vereinfachungen für eine effiziente Berechnung angenommen werden. Diese Vereinfachungen erlauben es dem Leser, die Funktionsweise des Verfahrens nachzuvollziehen, ohne das Letztere jedoch in irgendeiner Weise einzuschränken.

- Es wird davon ausgegangen, dass an jeder Absaugstelle die Gaszusammensetzung für trockene Luft (78.08% $N_2$; 20.95% $O_2$; 0.93% Ar; 0.04% $CO_2$) vorherrscht. Dabei wird eine spezifische Gaskonstante von $R_S$= 287,058 J/(kgK) angenommen.
- Der absolute Druck wird für die Berechnung der Dichte an verschiedenen Stellen im Netzwerk als konstant ($p_{Abs}$=101325 Pa) angenommen.
- Das Rohrleitungsnetzwerk erfährt keinen Temperaturverlust, d.h. es wird von einem adiabatischen Systemverhalten ausgegangen.

Verhalten der physikalischen Größen im System

- Bestimmung der Dichte des abzusaugenden Gases

Die Dichte des abzusaugenden Gases spielt in der Berechnung von Rohrleitungsnetzwerken eine große Rolle, da Volumenströme mit zunehmender oder abnehmender Dichte ebenfalls variieren. Die Dichte des abzusaugenden Gases kann nach folgender Gleichung 2 errechnet werden.

$$\rho = \frac{p_{Abs}}{R_s \, T_{Abs}} \qquad (2)$$

Wie aus der Gleichung ersichtlich ist, haben der absolute Umgebungsdruck $p_{Abs}$, die Umgebungstemperatur $TA_{bs}$ und die spezifische Gaskonstante $R_S$ Einfluss auf die Dichte des Gases. Die spezifische Gaskonstante, sowie der Absolutdruck können durch die im genannten Verfahren als konstante Größe angesehen werden.

- Druckverlust durch Strömungswiderstände

Wird ein physikalischer Körper von einem Medium durchströmt, so stellt dieser einen Widerstand dar, der zu einem Druckverlust führt. Für die Steuerung der Klappenstellungen werden die Druckverluste der verschiedenen Rohrleitungsstränge erfasst und in die mathematische Systembeschreibung einbezogen. Für eine einheitliche Rechnung wird der Druckverlust der verschiedenen Komponenten eines Entstaubungssystems mit Hilfe des Widerstandsbeiwerts Zeta (Formelzeichen: $\zeta$) als einheitenloser Faktor vorgenommen. Dieser Faktor ist ein Maß dafür, wie viel Druckverlust eine Komponente verursacht, wenn sie durchströmt wird. Die nachfolgende Gleichung 3 zeigt, wie der Druckverlust von dem Widerstandsbeiwert, der Gasdichte und der Strömungsgeschwindigkeit des Mediums abhängt.

$$\Delta p = \frac{1}{2}\, \zeta\, \rho\, v^2 \qquad\qquad (3)$$

Wie die Zeta-Werte verschiedener Komponenten bestimmt werden, wird in der folgenden Beschreibung beschrieben.

- Umrechnung Normvolumenstrom in Betriebsvolumenstrom

Bei der Angabe von benötigten Volumenströmen in Entstaubungsanlagen ist es üblich, sogenannte Normvolumenströme anzugeben. Diese beziehen sich auf einen theoretischen und idealisierten Vergleichswert. Üblicherweise werden folgende standardisierten Werte für Normvolumenströme verwendet [6].

- Normtemperatur = 273.15 K
- Normdruck = 101325 Pa

Da sekundäre Entstaubungsanlagen i.d.R. nicht in diesem Punkt betrieben werden, muss für eine abweichende Temperatur der tatsächliche Betriebsvolumenstrom berechnet werden. Mit der angenommenen Vereinfachung, dass an jeder Stelle der konstante Umgebungsdruck vorherrscht, kann aus dem Normvolumenstrom $\dot{V}_N$ und dem Verhältnis der Betriebstemperatur $T_B$ und der Normtemperatur $T_N$ der Betriebsvolumenstrom $\dot{V}_B$ berechnet werden (Gleichung 4).

$$\dot{V}_B = \dot{V}_N\, \frac{T_B}{T_N} \qquad\qquad (4)$$

- Temperaturveränderung durch Mischung von Volumenströmen

Treten in einer sekundären Entstaubungsanlage Volumenstromvereinigungen, mit mehreren Volumenströmen unterschiedlicher Temperaturen auf, so ist die neue Mischungstemperatur für weitere Berechnungen zu bestimmen. Mit der beschriebenen Vereinfachung, dass an jeder Absaugstelle die gleiche Gaszusammensetzung vorherrscht, ergibt sich Gleichung 5, die über eine einfache Verhältnisrechnung die Mischtemperatur bestimmt.
Dazu werden die einzelnen Normvolumenströme mit der jeweiligen Temperatur gewichtet und durch die Summe aller Normvolumenströme geteilt.

$$T_{neu} = \frac{\dot{V}_{N1}\, T_1 + \cdots + \dot{V}_{Nn}\, T_n}{\dot{V}_{N1} + \cdots + \dot{V}_{Nn}} \qquad\qquad (5)$$

Bestimmung der erforderlichen Widerstandsbeiwerte

Es wird in diesem Teil auf die Berechnung von Widerstandsbeiwerten verschiedener Rohrleitungselemente eingegangen. Der Widerstandsbeiwert nimmt in der Berechnung von Rohrleitungsnetzwerken eine bedeutende Rolle ein, da er ein direktes Maß für den verursachenden Druckverlust eines Rohrleitungselements ist und auch Einfluss auf die Dimensionierung von Rohrleitungselementen nimmt.
Nachfolgende Gleichung 6 zeigt die Definition des Widerstandsbeiwerts.

$$\zeta = \frac{2\, \Delta p}{\rho\, v^2} \qquad\qquad (6)$$

Um die Bestimmung des Widerstandsbeiwerts praxistauglich zu halten, empfiehlt es sich, diesen Wert empirisch zu bestimmen, da eine Berechnung dieses Werts durch die Einflussnahme vieler physikalischer Größen sehr aufwendig werden würde. Wie aus Gleichung 6 hervorgeht, muss für eine empirische Ermittlung des Widerstandsbeiwerts, der Druckverlust und die Strömungsgeschwindigkeit gemessen werden. Die Dichte des Mediums kann durch Gleichung 2 berechnet werden.

- Praktische Ermittlung der Widerstandsbeiwerte von Teilstrecken

Für Strecken von Rohrleitungselementen, die keine direkte Volumenstromvereinigung oder Volumenstromtrennung erfahren, kann der Widerstandsbeiwert als konstante Größe angenommen werden. Um den Mess- und Rechenaufwand möglichst gering zu halten, werden möglichst lange Teilstrecken mit unterschiedlichen Rohrleitungselementen zu einem Widerstandsbeiwert zusammengefasst. Ein Teilstrang, kann z.B. aus mehreren Rohrleitungselementen, wie gerade Rohrelemente, Krümmungen, Erweiterungen und T-Stücken bestehen.

Durch die Messung der Absolutdrücke am Eingang $p_1$ und am Ausgang $p_2$ des durchströmten Teilstrangs kann mit Hilfe der Gleichung 7 der Druckabfall im Teilstrang ermittelt werden.

$$\Delta p = p_1 - p_2 \qquad\qquad (7)$$

Mittels eines Staudruckrohres kann darüber hinaus die Strömungsgeschwindigkeit in einem Teilstrang gemessen werden. Wird der gemessene Druckabfall, sowie die ermittelte Strömungsgeschwindigkeit in Gleichung 6 eingesetzt, so ergibt sich als Ergebnis der Widerstandsbeiwert der Teilstrecke.

- Praktische Ermittlung der Widerstandsbeiwerte von T-Stücken

T-Stücke besitzen dynamisch veränderliche Widerstandsbeiwerte. Bei einer Volumenstromvereinigung oder Volumenstromtrennung entsteht dabei ein nichtlinearer Zusammenhang zum verursachten Druckverlust. Figur 3 zeigt eine Volumenstromvereinigung in einem T-Stück.

In der Fachliteratur für Strömungstechnik ist es üblich, den Widerstandsbeiwert eines T-Stücks auf die Gesamtströmungsgeschwindigkeit der vereinigten Teilströmungen zu beziehen. Diese Vorgehensweise ist für das in dieser Arbeit vorgestellte Steuerungskonzept unbrauchbar, da für eine Berechnung der Klappenstellungen die Widerstandsbeiwerte den jeweiligen Teilsträngen zugeordnet werden müssen. Es empfiehlt sich, die Funktion des Widerstandsbeiwerts ebenfalls empirisch zu ermitteln, da die in der Literatur verfügbaren Funktionen zu großen Einschränkungen unterliegen. Durch diese Einschränkungen weichen die so ermittelten Widerstandsbeiwerte stark von den wahren Werten ab.

Bei der empirischen Ermittlung wird das Verhältnis aus dem Teilvolumenstrom und dem Gesamtvolumenstrom gebildet. Für diesen Zustand wird eine Druckverlustmessung nach Gleichung 7 durchgeführt und die Strömungsgeschwindigkeit in dem Teilstrang gemessen.

Führt man diese Messung für verschiedene Volumenstromverhältnisse durch, und errechnet man zu jedem Verhältnis mit Gleichung 6 den Widerstandsbeiwert, ergibt sich beispielhaft das Resultat der Figur 4. Diese Abbildung zeigt den Widerstandsbeiwert der geraden Strecke des T-Stücks, der über das Volumenstromverhältnis aufgetragen ist.

Für eine automatisierte Steuerung muss diese Kennlinie in eine Funktion überführt werden, damit für jedes Volumenstromverhältnis eine Aussage über die Größe des Widerstandsbeiwertes erhalten wird. Dazu wird die Kennlinie durch eine Funktion angenähert. Diese Überführung wird anhand von an sich bekannten Algorithmen ausgeführt und benötigt keine weitere Beschreibung in diesem Zusammenhang. Für das Beispiel in Figur 4 ergibt sich die folgende Gleichung 8.

$$f(x) = 0{,}2764 x^{-2{,}74} \qquad\qquad (8)$$

Das spezifische Verhalten eines Rohrelements hängt selbstverständlich von den eingesetzten Bauteilen ab und kann mittels der beschriebenen Schritte für jegliche Rohrbauteile und insbesondere für jegliche Vereinigungselement ermittelt werden.

- Praktische Ermittlung der Widerstandsbeiwerte von Abluftklappen

Der Widerstandsbeiwert von Abluftklappen ist in erster Linie von der Schließposition der Klappen abhängig. Daher ist es sinnvoll, eine Messung des Widerstandbeiwertes in Abhängigkeit der Schließposition durchzuführen. Die empirische Widerstandsermittlung ist nötig, da die Widerstandsbeiwerte in der Literatur und in diversen Simulationsprogrammen stark voneinander abweichen. Für die Ermittlung dieser Werte wird ebenfalls eine Kennlinie nach der gleichen Methode, die für das T-Stück beschrieben wurde, angenommen.

Um den Widerstandsbeiwert einer Klappe zu ermitteln, wird die Klappe nacheinander in verschiedene Schließpositionen gefahren. Zu jeder Schließposition werden der verursachte Druckverlust, sowie die Strömungsgeschwindigkeit gemessen. Mit Gleichung 6 kann dann der Widerstandsbeiwert errechnet werden. Nachfolgende Figur 5 zeigt eine beispielhaft aufgenommene Kennlinie einer einflügeligen Abluftklappe.

Wird die Kennlinie des Beispiels aus Figur 5 als Funktion angenähert, so ergibt sich Gleichung 9.

$$f(x) = 0{,}1061\, e^{0{,}0776x} \tag{9}$$

Da der erfindungsgemäße Steueralgorithmus die Funktion der Schließposition in Abhängigkeit des Widerstandsbeiwertes benötigt, wird aus Gleichung 9 die Umkehrfunktion (Gleichung 10) gebildet.

$$f(x) = 12{,}8866\, (\ln(x) + 2.24337) \tag{10}$$

Diese Funktion ist geeignet, um im Steueralgorithmus hinterlegt zu werden. Durch sie kann die Schließposition der Klappe für einen benötigten Widerstandsbeiwert ermittelt werden.

Umwandlung eines Rohrleitungsnetzwerks in ein mathematisches Systemmodell

- Herleitung des quadratischen Widerstandsgesetzes

In Analogie zu der Elektrotechnik ist es möglich, Rohrleitungsnetzwerke in Widerstandsnetzwerke zu überführen. Für diese Darstellung ist es nötig, die verschiedenen Elemente eines Rohrleitungsnetzwerks in Widerstände umzuformen. Dies geschieht nach der Druckverlustgleichung für turbulente Strömungen nach Darcy (Gleichung 11). Diese beschreibt den Druckverlust in geraden Rohrstrecken. Dabei stellt λ die Rohrreibungszahl und d den Durchmesser des Rohrleitungselements dar.

$$\Delta p = \frac{\lambda\, l\, \rho}{2\, d\, A^2}\, \dot{V}^2 \tag{11}$$

Wird die Druckverlustberechnung anhand des Widerstandsbeiwerts durchgeführt, so kann Gleichung 11 in Gleichung 12 überführt werden.

$$\Delta p = \frac{\zeta\, \rho}{2\, A^2}\, \dot{V}^2$$
$$mit\ \zeta = \lambda \frac{l}{d} \tag{12}$$

Aus dieser Gleichung lässt sich das quadratische Widerstandsgesetz (Gleichung 13) ableiten, nachdem der Druckverlust Δp gleich dem Produkt aus dem Widerstand R und dem Quadrat des Volumenstroms $\dot{V}$ ist.

$$\Delta p = R\, \dot{V}^2$$
$$mit\ R = \frac{\zeta\, \rho}{2\, A^2} \tag{13}$$

Unter Zuhilfenahme von Gleichung 13 ist es möglich, die verschiedenen Rohrleitungselemente in einen Widerstandswert umzuformen.

- Knoten- und Maschenregel in Rohrleitungssystemen

Analog zu den Kirchhoffschen Regeln der Elektrotechnik gelten in einem Rohrleitungsnetzwerk ähnliche Regeln.

Diese Regeln werden in dem Steueralgorithmus genutzt, um das Netzwerk zu berechnen.

- Knotenregel in Rohrleitungssystemen

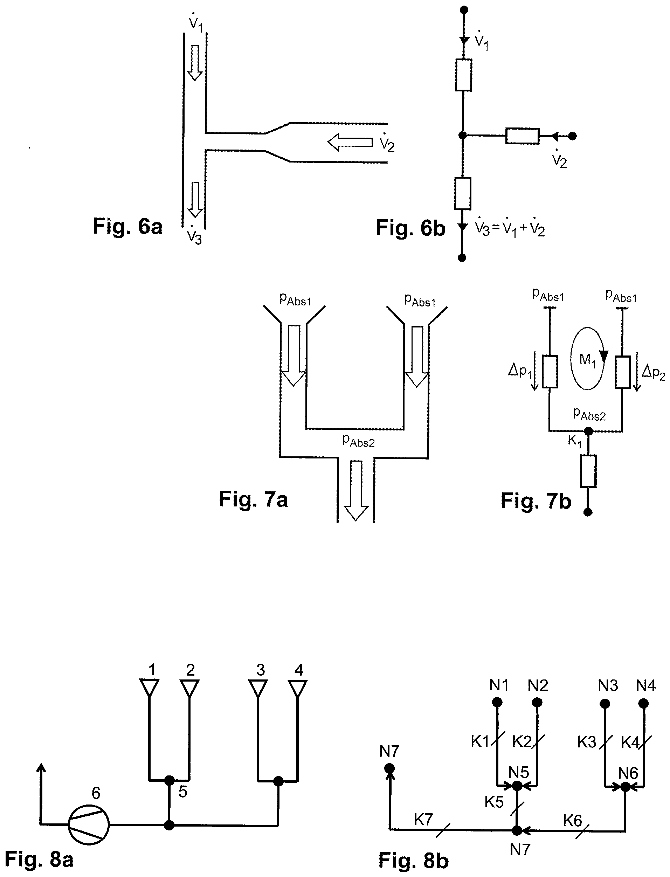

Tritt in einem Rohrleitungsnetzwerk ein Knotenpunkt wie in Figur 6a auf, so vereinigen bzw. trennen sich dort Volumenströme. Das entsprechende Widerstandsnetzwerk ist in Figur 6b gezeigt.
Die Knotenregel besagt, dass die Addition aller Zu- und Abflüsse in einem Knoten den Wert Null ergibt. Hierbei werden Volumenströme, die in den Knoten hineinlaufen, positiv erfasst. Abfließende Volumenströme werden negativ erfasst. Mathematisch drückt die nachfolgende Summenformel (Gleichung 14) diesen Zusammenhang aus, wobei k die Anzahl der angrenzenden Teilstränge darstellt.

$$\sum_{n=1}^{k} \dot{V}_n = 0 \qquad (14)$$

Mithilfe dieser Knotenregel ist es bei bekannten Volumenstromeingängen möglich, die Größe des Volumenstroms eines jeden Teilstrangs zu errechnen.

- Maschenregel in Rohrleitungssystemen

Die Maschenregel für Rohrleitungssysteme besagt, dass die Summe aller Druckverluste einer Masche den Wert Null ergibt. Figur 7a zeigt eine solche Masche. Figur 7b zeigt das entsprechende Widerstandsnetzwerk. Wie in Figur 7b zu sehen ist, wird dazu eine Masche im Netzwerk bestimmt und im Uhrzeigersinn abgegangen. Druckverluste im Uhrzeigersinn werden dabei positiv gezählt, Druckverluste gegen den Uhrzeigersinn werden negativ gezählt.
In einer Formel wird dieser Zusammenhang mit Gleichung 15 ausgedrückt. Hierbei gibt l die zu einer Masche gehörende Anzahl an Zweigen an.

$$\sum_{n=1}^{l} \Delta \mathrm{p}_n = 0 \qquad (15)$$

Mit Hilfe der Maschenregel ist es möglich, bisher nicht bekannte Drücke in einem Rohrleitungssystem zu errechnen.

- Aufteilung der Teilstränge in Widerstände

Wird ein Teilstrang einer sekundären Entstaubungsanlage betrachtet, ist zu erkennen, dass dieser aus einer Vielzahl verschiedener Rohrleitungselemente wie z.B. Krümmungen, Erweiterungen oder Reduzierungen besteht.
Jeder Teilstrang wird in verschiedene Teilwiderstände aufgeteilt, wobei folgende Unterscheidung vorgenommen wird.

- Dynamische Widerstände von Abluftklappen, hier ist der Widerstandsbeiwert eine Funktion der Schließposition (%);
- Dynamische Widerstände von T-Stücken, hier ist der Widerstandsbeiwert eine Funktion der Volumenströme;
- Konstante Widerstände sonstiger Rohrleitungselemente.

Auf Grundlage dieser Regeln ist es offensichtlich, dass ein Rohrleitungsnetzwerk in ein mathematisches Systemmodell, z. B. ein Widerstandsnetzwerk, überführt werden kann, welches das Rohrleitungsnetzwerk beschreibt. Im Steuerungskonzept gemäß der Erfindung werden die Druckverluste der verschiedenen Teilstränge unter Anwendung des quadratischen Widerstandsgesetz und der Maschen- und Knotenregel berechnet. Die beschriebenen Regeln erlauben die Beschreibung von Rohrleitungsnetzwerken, welche ein Saugzuggebläse mit einer Vielzahl von Absaugstellen verbindet, wobei sich ein mit dem Saugzuggebläse verbundener Hauptstrang mehrmals baumartig verzweigen kann, und wobei am Ende jedes Zweiges eine Absaugstelle verbunden ist. Durch iterative Anwendung der Knoten und Maschenregeln werden die Druckverhältnisse in der gesamten Baumstruktur berechnet.

Berechnungsbeispiel

Die gezeigte Berechnung wird an einem fiktiven Rohrleitungsnetzwerk mit vier Absaugstellen 1 - 4 und einem Saugzuggebläse 6 erläutert. Beispielhaft ist auf ein Vereinigungsteil, z. B. ein T-Stück 5 abgebildet. Diese Berechnung ist solche, die vorzugsweise von einer Rechnereinheit eines Computers oder einem Steuerungssystem ausgeführt wird. Figur 8a zeigt eine schematische Darstellung eines sekundären Entstaubungsnetzwerks. Auf Grundlage eines graphentheoretischen Ansatzes kann ein solches Netzwerk in eine Kanten- und Knotenbeziehung überführt werden (Figur 8b). Durch Gewichtung der Kanten K1-K7 durch die physikalischen Systemgrößen und Funktionen, sowie durch bekannten geometrischen Abmaße der einzelnen Bauteile, ist die Grundlage für eine mathematische Systembeschreibung geschaffen. Solche Systemgrößen können beispielsweise folgend aufgezählten Eigenschaften sein:

- geometrische Abmaße der Rohrleitungselemente;
- fixe Widerstandsbeiwerte der Rohrleitungselemente;
- dynamische Widerstandsbeiwertfunktionen der Rohrleitungselemente;
- Wärmeübertragungskoeffizient der Rohrleitungselemente;
- Druckerhöhung oder Druckerniedrigung durch Leckage, Boostergebläse oder ähnliches.

Sind diese Informationen in der Speichereinheit des entsprechenden Computers oder Steuerungseinheit abgelegt und liegt eine vollständige Beschreibung der Knoten und Kantenbeziehung sowie deren Zusammengehörigkeit vor (z. B. in Form einer Adjazenzmatrix), so kann die Recheneinheit mit Hilfe eines Algorithmus und der Angabe der benötigten Normvolumenströme und Temperaturen an den Absaugstellen, damit beginnen, folgende Werte für die Knoten N1-N8 im System zu bestimmen:

- Temperatur in den Rohrleitungselementen;
- Dichte in den Rohrleitungselementen;
- Betriebsvolumenströme.

Dabei erfolgt die Berechnung nach bekannten oder für diesen Fall angepassten physikalischen Formeln (z.B. Riechmannsche Mischungsregel). Als Ergebnis der Berechnung ergibt sich der Betriebsvolumenstrom, die Dichte des abzusaugenden Mediums und die Temperatur des Mediums an einem jedem Knotenpunkt.

Um eine solche sekundäre Entstaubungsanlage energieeffizient zu betreiben, muss die Absaugstelle, die den höchsten Druckverlust verursacht, bekannt sein. Diese wird mit Hilfe der Informationen aus den gewichteten Kanten und Knoten ermittelt. Dabei wird geprüft, welcher Weg von dem Saugzuggebläse zu einer Absaugstelle den höchsten Druckverlust (bei voll geöffneter Klappe) verursacht. Hierfür werden nach dem quadratischen Widerstandsgesetz für turbulente Strömungen die Widerstandswerte der verschiedenen Rohrleitungen ermittelt. Diese Widerstandswerte werden mit dem Quadrat der Volumenströme von den jeweiligen Rohrsträngen multipliziert. Als Ergebnis ergibt sich der Druckverlust des jeweiligen Rohrstrangs. Dadurch, dass hintereinanderliegende Druckverluste addiert werden können (Gültigkeit von Maschen und Knotenregeln in Rohrleitungsnetzwerken) kann so der höchste Druckverlust bestimmt werden. Die Abluftklappe von diesem Strang wird zu 100% geöffnet, alle anderen Klappen werden in ihrer Öffnungsposition so angepasst, dass die Maschenregel für die geforderten Normvolumenströme weiterhin Gültigkeit besitzt.

Die oben aufgeführten Ausführungsbeispiele dienen vor allem dem besseren Verständnis und sollten nicht einschränkend verstanden werden. Der Schutzumfang der vorliegenden Patentanmeldung ergibt sich aus den Patentansprüchen.

Die Merkmale der beschriebenen Ausführungsbeispiele können miteinander kombiniert oder gegeneinander ausgetauscht werden. Ferner können die beschriebenen Merkmale durch den Fachmann an vorhandene Gegebenheiten oder vorliegende Anforderungen angepasst werden.

## Patentansprüche

1. Steuerungsverfahren für eine sekundäre Entstaubungsanlage (400), bei der ein Rohrleitungsnetzwerk ein Saugzuggebläse mit wenigstens zwei Absaugstellen verbindet, wobei das Rohrleitungsnetzwerk für jede Absaugstelle eine steuerbare Abluftklappe umfasst, deren Klappenstellung den Volumenstrom an der Absaugstelle beeinflusst, und wobei das Steuerungsverfahren folgende Schritte umfasst:

   - Bereitstellen eines mathematischen Systemmodells (300) welches das Rohrleitungsnetzwerk beschreibt, wobei jedes Rohrelement durch seine physikalischen und geometrischen Eigenschaften gekennzeichnet ist (10);
   - Berechnen der Druckverluste im Rohrleitungsnetzwerk auf Grundlage des voll bestimmten mathematischen Systemmodells und der an den Absaugstellen geforderten Volumenströme (20);
- Berechnen der Klappenstellung für jede Abluftklappe und des Druckverlusts des Gesamtsystems, welche es erlauben mit möglichst geringer Förderleistung die geforderten Betriebsvolumenströme zu erreichen (30);
- Steuerung der Abluftklappen so, dass die berechneten Klappenstellungen gewährleistet werden (40);
- Steuerung des Saugzuggebläses so, dass dessen Drehzahl solange erhöht wird, bis der berechnete Druckverlust des Gesamtsystems erreicht wird und somit die Volumenströme an den Absaugstellen gewährleistet werden (50).

2. Steuerungsverfahren nach Anspruch 1, wobei die benötigten physikalischen Parameter im Rohrleitungsnetzwerk anhand folgender Größen berechnet werden:

- Widerstandsbeiwerte, welche die durchströmten Rohrelemente kennzeichnen;
- Wärmeübertragungskoeffizient der durchströmten Rohrelemente;
- geometrischer Eigenschaften der durchströmten Rohrelemente;
- Volumenströme welche die Rohrelemente durchströmen.

3. Steuerungsverfahren nach einem der Ansprüche 1 bis 2, wobei die Berechnungsschritte (20, 30) folgende weitere Schritte umfassen:

- Berechnen des Druckverlusts für jeden Rohrstrang des Rohrleitungsnetzwerks, wobei ein Rohrstrang oder mehrere Rohrstränge das Saugzuggebläse mit der Absaugstelle verbindet;
- Ermitteln des Rohrstrangs mit dem höchsten berechneten Druckverlust bei voll geöffneten Klappen;
- Festlegung der Klappenstellung der entsprechenden Abluftklappe als 100% geöffnet.

4. Steuerungsverfahren nach Anspruch 3, wobei die restlichen Klappenstellungen so festgelegt werden, dass die Gültigkeit der Maschen- und Knotenregel in Bezugnahme der geforderten Volumenströme erfüllt ist.

5. Steuerungsverfahren nach einem der Ansprüche 1 bis 4, wobei das Rohrleitungsnetzwerk einen Hauptstrang umfasst, welcher in Verbindung mit dem Saugzuggebläse steht, und welcher sich in wenigstens zwei Nebenstränge verzweigt, welche jeweils mit wenigstens einer Absaugstelle verbunden sind.

6. Steuerungsverfahren nach Anspruch 5, wobei die Berechnungsschritte (20, 30) folgende weitere Schritte umfassen:

- Berechnen des Druckverlusts in den Haupt- und Nebensträngen aufgrund der gegebenen physikalischen und geometrischen Eigenschaften und Volumenströme;
- Berechnen des Druckverlusts des gesamten Systems durch die Maschenregel.

7. Steuerungsverfahren nach einem der Ansprüche 3 bis 6, wobei der Widerstandswert eines Rohrstrangs sich durch Addieren der Widerstandswerte der Rohrelemente ergibt, aus welchem sich der Rohrstrang zusammensetzt.

8. Steuerungsverfahren nach einem der Ansprüche 1 bis 7, wobei das Rohrleitungsnetzwerk sich aus verschiedenen Rohrelementen zusammensetzt, welche gerade Rohrelemente, Krümmungen, Erweiterungen, Reduzierungen und Zusammenführungen umfassen.

9. Steuerungsvorrichtung (100) für eine sekundäre Entstaubungsanlage (400), bei der ein Rohrleitungsnetzwerk ein Saugzuggebläse mit wenigstens zwei Absaugstellen verbindet, wobei das Rohrleitungsnetzwerk für jede Absaugstelle eine steuerbare Abluftklappe umfasst, deren Klappenstellung den Volumenstrom der an der Absaugstelle beeinflusst, und wobei die Steuerungsvorrichtung folgende Elemente umfasst:

- ein Speicherelement (110) zum Bereitstellen einer mathematischen Systembeschreibung (300), welche das Rohrleitungsnetzwerk beschreibt, wobei jedes Rohrelement des Rohrleitungsnetzwerks durch seine physikalischen und geometrischen Eigenschaften gekennzeichnet ist;
- eine Rechnereinheit (120), welche das Speicherelement auslesen kann, und dazu konfiguriert ist Druckverluste im Rohrleitungsnetzwerk aufgrund der physikalischen und geometrischen Eigenschaften der Rohrleitungselemente sowie der an den Absaugstellen geforderten Volumenströme zu berechnen, wobei die Rechnereinheit des Weiteren dazu konfiguriert ist die Klappenstellung für jede Abluftklappe und den Druckverlust des gesamten Systems zu berechnen, welche es erlauben, bei möglichst geringem Druckverlust des gesamten Systems die geforderten Volumenströme an den Absaugstellen zu gewährleisten.

- eine Steuereinheit (130), welche die Klappenstellung der Abluftklappen und die Drehzahl des Saugzuggebläses auf Grundlage des ermittelten Druckverlusts des gesamten Systems steuert.

10. Steuerungsvorrichtung nach Anspruch 9, wobei die Vorrichtung weiter Einlesemittel umfasst, welche es ermöglichen, die physikalischen und geometrischen Größen, die das Rohrleitungsnetzwerk beschreiben, in das Speicherelement (110) einzulesen, und wobei die Rechnereinheit (120) weiter dazu konfiguriert ist, eine mathematische Systembeschreibung (300) anhand dieser Größen zu erstellen, welche das Rohrleitungsnetzwerk beschreibt, und dieses im Speicherelement abzulegen.

11. Steuerungsvorrichtung nach einem der Ansprüche 9 oder 10, wobei die Rechnereinheit weiter dazu konfiguriert ist, die Schritte gemäß einem der Ansprüche 2 bis 8 auszuführen.

12. Computerprogramm, welches computerlesbare Befehle umfasst, welche, wenn sie von einem Computer ausgeführt werden, den Computer dazu bringen, das Verfahren gemäß einem der Ansprüche 1 bis 8 auszuführen.

13. Ein Computerprogrammprodukt, welches ein computerlesbares Medium umfasst, auf welchem das Computerprogramm nach Anspruch 12 gespeichert ist.


**Claims**

1. Control method for a secondary dust removal installation (400), in which a pipe duct network connects a suction extractor fan with at least two suction points, wherein the pipe duct network comprises, for each suction point, a controllable exhaust air flap, the flap setting of which influences the volume flow at the suction point, and wherein the control method comprises the following steps:

   - providing a mathematical system model (300) describing the pipe duct network, wherein each pipe element is **characterised by** its physical and geometric characteristics (10);
   - calculating the pressure losses in the pipe duct network on the basis of the fully defined mathematical system model and the volume flows (20) required at the suction points;
   - calculating the flap setting for each exhaust air flap and the pressure loss of the overall system, which allow attainment (30) of the required operating volume flows with smallest possible conveying power;
   - controlling the exhaust air flaps so that the calculated flap settings are guaranteed (40); and
   - controlling the suction extractor fan so that the rotational speed thereof is increased until the calculated pressure loss of the overall system is reached and thus the volume flows at the suction points are guaranteed (50).

2. Control method according to claim 1, wherein the necessary physical parameters in the pipe duct network are calculated on the basis of the following variables:

   - resistance correction values characterising the pipe elements conducting flow;
   - heat transfer coefficient of the pipe elements conducting flow;
   - geometric characteristics of the pipe elements conducting flow; and
   - volume flows which the pipe elements conduct.

3. Control method according to one of claims 1 and 2, wherein the calculation steps (20, 30) comprise the following further steps:

   - calculating the pressure loss for each pipe run of the pipe duct network, wherein a pipe run or several pipe runs connects or connect the suction extractor fan with the suction point;
   - determining the pipe run with the highest calculated pressure loss when the flaps are fully open; and
   - establishing the flap setting of the corresponding exhaust flap as 100% open.

4. Control method according to claim 3, wherein the remaining flap settings are established in such a way that the validity of the mesh and nodal rule with respect to the required volume flows is fulfilled.

5. Control method according to any one of claims 1 to 4, wherein the pipe duct network comprises a main run which is connected with the suction extractor fan and which branches into at least two subsidiary runs each connected with at least one suction point.

6. Control method according to claim 5, wherein the calculating steps (20, 30) comprise the following further steps:

   - calculating the pressure loss in the main and subsidiary runs on the basis of given physical and geometric characteristics and volume flows;
   - calculating the pressure loss of the overall system by the mesh rule.

7. Control method according to any one of claims 3 to 6, wherein the resistance value of a pipe run results from addition of the resistance values of the pipe elements making up the pipe run.

8. Control method according to any one of claims 1 to 7, wherein the pipe duct network is composed of different pipe elements comprising straight pipe elements, bends, expanders, reducers and junctions.

9. Control device (100) for a secondary dust removal installation (400), in which a pipe duct network connects a suction extractor fan with at least two suction points, wherein the pipe duct network comprises, for each suction point, a controllable exhaust air flap, the flap setting of which influences the volume flow at the suction point, and wherein the control device comprises the following elements:

   - a memory element (110) for providing a mathematical system description (300) describing the pipe duct network, wherein each pipe element of pipe duct network is **characterised by** its physical and geometric characteristics;
   - a computer unit (120) which can read out the memory unit and which is configured to calculate pressure losses in the pipe duct network on the basis of the physical and geometric characteristics of the pipe duct elements as well as the volume flows required at the suction points, wherein the computer unit is further configured for the purpose of calculating the flap setting for each exhaust air flap and the pressure loss of the overall system, which allow the required volume flows at the suction points to be guaranteed with smallest possible pressure loss of the overall system; and
   - a control unit (130) which controls the flap setting of the exhaust air flaps and the rotational speed of the suction extractor fan on the basis of the determined pressure loss of the overall system.

10. Control device according to claim 8, wherein the device comprises further reading-in means making it possible to read into the memory unit (110) the physical and geometric variables describing the pipe duct network, and wherein the computer unit (120) is further configured for the purpose of setting up on the basis of these variables a mathematical system description (300), which describes the pipe duct network, and to file this in the memory element.

11. Control device according to one of claims 9 and 10, wherein the computer unit is further configured for the purpose of executing the steps in accordance with any one of claims 2 to 8.

12. Computer program comprising computer-readable commands which when they are executed by a computer configure the computer executing the method according to any one of claims 1 to 8.

13. A computer program product comprising a computer-readable medium on which the computer program according to claim 12 is stored.

**Revendications**

1. Procédé de commande pour une installation de dépoussiérage secondaire (400) ; dans lequel un réseau de conduits tubulaires relie un ventilateur d'aspiration à au moins deux endroits d'aspiration ; dans lequel le réseau de conduits tubulaires comprend, pour chaque endroit d'aspiration, un clapet d'évacuation qui peut être commandé, la position des clapets influençant le courant volumique à l'endroit d'aspiration; et dans lequel le procédé de commande comprend les étapes suivantes consistant à :

   - procurer un modèle de système mathématique (300) qui décrit le réseau de conduits tubulaires ; dans lequel chaque élément tubulaire est **caractérisé par** ses propriétés physiques et géométriques (10) ;
   - calculer les pertes de pression dans le réseau de conduits tubulaires en se basant sur le modèle de système mathématique totalement déterminé et en se basant sur les courants volumiques transportés aux endroits d'aspiration (20) ;
   - calculer la position des clapets pour chaque clapet d'évacuation et la perte de pression du système dans sa totalité, ce qui permet d'atteindre avec une puissance de transport la plus minime possible les courants volumiques d'exploitation requis (30) ;
- commander les clapets d'évacuation d'une manière telle que l'on garantit les positions des clapets calculées (40) ;
- commander le ventilateur d'aspiration d'une manière telle que l'on augmente sa vitesse de rotation jusqu'à ce que l'on atteigne la perte de pression calculée du système dans sa totalité et que l'on garantisse ainsi les courants volumiques aux endroits aspiration (50).

**2.** Procédé de commande selon la revendication 1, dans lequel on calcule les paramètres physiques requis dans le réseau de conduits tubulaires en se référant aux valeurs suivantes :

- les indices de résistance qui caractérisent les éléments tubulaires traversés ;
- le coefficient de transfert de chaleur des éléments tubulaires traversés ;
- les propriétés géométriques des éléments tubulaires traversés ;
- les courants volumiques qui traversent les éléments tubulaires.

**3.** Procédé de commande selon l'une quelconque des revendications 1 à 2, dans lequel les étapes de calcul (20, 30) comprennent les étapes supplémentaires suivantes consistant à :

- calculer la perte de pression pour chaque barre tubulaire du réseau de conduits tubulaires ; dans lequel une barre tubulaire ou plusieurs barres tubulaires relient le ventilateur d'aspiration à l'endroit d'aspiration ;
- déterminer la barre tubulaire présentant la perte de pression calculée la plus élevée en présence de clapets complètement ouverts ;
- établir la position du clapet d'évacuation correspondant comme étant égale à une ouverture de 100 %.

**4.** Procédé de commande selon la revendication 3, dans lequel on détermine les positions restantes des clapets d'une manière telle que l'on confirme la validité de la loi des mailles et de la loi des noeuds par référence aux courants volumiques requis.

**5.** Procédé de commande selon l'une quelconque des revendications 1 à 4, dans lequel le réseau de conduits tubulaires comprend une barre principale qui est mise en relation avec le ventilateur d'aspiration et qui se ramifie en au moins deux barres secondaires qui sont respectivement reliées à au moins un endroit d'aspiration.

**6.** Procédé de commande selon la revendication 5, dans lequel les étapes de calcul (20, 30) comprennent les étapes suivantes consistant à :

- calculer la perte de pression dans la barre principale et dans les barres secondaires sur base des propriétés géométriques et physiques et des courants volumiques qui ont été fournis ;
- calculer la perte de pression du système dans sa totalité par l'intermédiaire de la loi des mailles.

**7.** Procédé de commande selon l'une quelconque des revendications 3 à 6, dans lequel on obtient la valeur de résistance d'une barre tubulaire grâce à l'addition des valeurs de résistance des éléments tubulaires qui composent la barre tubulaire.

**8.** Procédé de commande selon l'une quelconque des revendications 1 à 7, dans lequel le réseau de conduits tubulaires se compose de différents éléments tubulaires qui comprennent des éléments tubulaires droits, des incurvations, des élargissements, des réductions et des combinaisons.

**9.** Dispositif de commande (100) pour une installation de dépoussiérage secondaire (400), dans lequel un réseau de conduits tubulaires relie un ventilateur d'aspiration à au moins deux endroits d'aspiration ; dans lequel le réseau de conduits tubulaires comprend, pour chaque endroit d'aspiration, un clapet d'évacuation qui peut être commandé, la position des clapets influençant le courant volumique à l'endroit d'aspiration; et dans lequel le dispositif de commande comprend les éléments suivants :

- un élément faisant office de mémoire (110) destiné à procurer une description du système mathématique (300) qui décrit le réseau de conduits tubulaires ; dans lequel chaque élément tubulaire du réseau de conduits tubulaires se **caractérise par** ses propriétés physiques et chimiques ;
une unité de calcul (120) qui peut procéder à une extraction par lecture à partir de l'élément faisant office de

EP 3 074 834 B1

mémoire, et qui est configurée à cet effet pour calculer des pertes de pression dans le réseau de conduits tubulaires en se basant sur les propriétés physiques et chimiques des éléments de conduits tubulaires, et en se basant sur les courants volumiques transportés aux endroits d'aspiration; dans lequel l'unité de calcul est en outre configurée pour calculer la position de chaque clapet d'évacuation ainsi que la perte de pression du système dans sa totalité, ce qui permet de garantir, dans le cadre d'une perte de pression la plus minime possible du système dans sa totalité, les courants volumiques requis aux endroits d'aspiration ;
- une unité de commande (130) qui commande la position des clapets d'évacuation et la vitesse de rotation du ventilateur d'aspiration en se basant sur la perte de pression déterminée du système dans sa globalité.

10. Dispositif de commande selon la revendication 9, dans lequel le dispositif comprend des moyens supplémentaires d'insertion par lecture qui permettent d'introduire par lecture dans l'élément (110) faisant office de mémoire, les valeurs physiques et géométriques qui décrivent le réseau de conduits tubulaires ; et dans lequel l'unité de calcul (120) est en outre configurée pour établir une description du système mathématique (300) en se basant sur ces valeurs, qui décrit le réseau de conduits tubulaires, et pour stocker le système en question dans l'élément faisant office de mémoire.

11. Dispositif de commande selon l'une quelconque des revendications 9 ou 10, dans lequel l'unité de calcul est en outre configurée pour la mise en oeuvre des étapes selon l'une quelconque des revendications 2 à 8.

12. Programme informatique, qui comprend des consignes lisibles par ordinateur qui, lorsqu'elles sont exécutées par un ordinateur, conduisent l'ordinateur à mettre en oeuvre le procédé selon l'une quelconque des revendications 1 à 8.

13. Produit de programme informatique, qui comprend un support lisible par ordinateur, sur lequel est mis en mémoire le programme informatique selon la revendication 12.

16

**Fig. 1**

**Fig. 2**

**Fig. 3**

**Fig. 4**

**Fig. 5**

**Fig. 6a**

**Fig. 6b** $\dot{V}_3 = \dot{V}_1 + \dot{V}_2$

**Fig. 7a**

**Fig. 7b**

**Fig. 8a**

**Fig. 8b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0116727 A2

- CN 102635920 A